(19) Europäisches Patentamt / European Patent Office / Office européen des brevets

(11) **EP 3 693 649 B1**

(12) **EUROPEAN PATENT SPECIFICATION**

(45) Date of publication and mention
of the grant of the patent:
**07.09.2022 Bulletin 2022/36**

(21) Application number: **18864433.0**

(22) Date of filing: **13.07.2018**

(51) International Patent Classification (IPC):
**F16L 59/065** (2006.01)    **G01M 3/16** (2006.01)

(52) Cooperative Patent Classification (CPC):
**F16L 59/065; G01M 3/16**

(86) International application number:
**PCT/JP2018/026495**

(87) International publication number:
**WO 2019/069531 (11.04.2019 Gazette 2019/15)**

(54) **VACUUM HEAT-INSULATING MATERIAL**

VAKUUMWÄRMEDÄMMENDES MATERIAL

MATÉRIAU D'ISOLATION THERMIQUE SOUS VIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.10.2017 JP 2017193570**

(43) Date of publication of application:
**12.08.2020 Bulletin 2020/33**

(73) Proprietor: **Asahi Fiber Glass Co., Ltd.**
**Tokyo 101-0045 (JP)**

(72) Inventor: **YAMAMOTO Hideya**
**Tokyo 101-0045 (JP)**

(74) Representative: **Gulde & Partner**
**Patent- und Rechtsanwaltskanzlei mbB**
**Wallstraße 58/59**
**10179 Berlin (DE)**

(56) References cited:
**WO-A1-2012/017903    WO-A1-2015/115460
WO-A1-2017/026446    JP-A- H06 140 498
JP-A- H10 239 199     JP-A- S62 501 931
JP-A- 2008 304 463    JP-A- 2012 110 979
JP-A- 2012 136 254    JP-A- 2012 180 904
JP-A- 2012 180 904    JP-A- 2013 218 439
JP-A- 2015 097 453    JP-A- 2015 513 327
JP-A- 2016 144 560    JP-B1- 4 641 565
JP-B1- 4 641 565      US-B2- 9 476 635**

**Description**

TECHNICAL FIELD

The present invention relates to a vacuum heat-insulating member usable for an exterior wall of a dwelling house or an industrial plant, or the like, to efficiently utilize heat energy. More specifically, the present invention relates to a vacuum heat-insulating member comprising a small-size sensor capable of measuring physical properties of the inside of the vacuum heat-insulating module, a wireless transmission device, and a battery.

BACKGROUND ART

A vacuum heat-insulating member is frequently used in various fields, e.g., in refrigerators, thermos bottles, and exterior walls of dwelling houses and industrial plants, as a heat-insulating material having higher heat-insulating performance than that of foamed polystyrene. This vacuum heat-insulating member may be constructed, for example, by: entirely covering a core composed of a porous body internally having many voids, with a bag-shaped gas barrier film for encapsulating the core; depressurizing the inside of the gas barrier film; heat-sealing an opening portion of the gas barrier film; and providing an outer layer outside the gas barrier film.

Generally, the vacuum heat-insulating member has a problem that, due to the progress of aging along with long-term operation, gas such as air gradually flow thereinside from the outside over time, and the inflow of gas causes deterioration in heat-insulating performance thereof, and involves a technical problem in terms of long-term operation and performance prediction. Further, a method of checking the heat-insulating performance of the vacuum heat-insulating member after installation thereof was limited. Specifically, there was no other option but to de-install the vacuum heat-insulating member to measure the thermal conductivity thereof, thereby reading an accurate change in the heat-insulating performance

Therefore, as a conventional technique, there has been proposed a vacuum heat-insulating member internally provided with a mechanism capable of measuring a variety of information such as temperature, humidity and gas molecules, in addition to the degree of vacuum directly related to the heat-insulating performance of the vacuum heat-insulating member, so as to monitor the performance of the vacuum heat-insulating member over a long period of time, and transmitting the information about the inside of the vacuum heat-insulating member to the outside.

As an example, a vacuum heat-insulating panel described in JP 4641565B is configured such that a core is entirely covered with a gas barrier outer cover, and a temperature sensor unit capable of measuring the temperature of surroundings, a communication unit capable of wireless communication about a result of the measurement by the temperature sensor unit, and a battery, are arranged inside the outer cover. Further, in a vacuum heat-insulating panel described in JP 2012-136254A, a heat-insulating material is entirely covered with a gas barrier film (outer cover), and the inside of the gas barrier film is vacuumized, wherein at least a vacuum sensor, a communication unit capable of transmitting vacuum data detected by the vacuum sensor to the outside, and a battery, are provided inside the outer cover. A similar vacuum heat-insulating panel is also described in JP 2015-513327A.

As above, the conventional vacuum heat-insulating panels each having a built-in sensor are capable of measuring the degree of vacuum therein and the temperature of surroundings thereof, and transmitting resulting measurement values to the outside, so that it is possible to monitor the heat-insulating performance of the vacuum heat-insulating panel.

WO 2012/017903 A1 discloses a vacuum heat insulating panel in which a heat-insulating core material is covered with a gas barrier sheathing material and an inside of the enveloping material is in a vacuum state. The vacuum heat insulating panel comprises a battery; a temperature sensor capable of detecting at least the outer temperature of the outer sheathing material; a communication unit capable of wireless communicating detection data by a sensor with the outside; and a data logger capable of storing sensed data installed inside the envelope. JP 2012-180904 A discloses a heat insulation sensor which can easily be mounted at desired positions on a heat insulating panel.

SUMMARY OF INVENTION

[Technical Problem]

However, in the above conventional vacuum heat-insulating panels, there are many technical problems in measuring physical properties of the inside thereof using a sensor or the like, and such technical problems have not been solved. Specifically, there are four major problems. Among them, a first technical problem is a long-term physical properties measurement technique. Specifically, a usable life of a commonly-used vacuum heat-insulating member is alleged to be six months or more, so that it can be expected to realize long-term operation, whereas, in a vacuum heat-insulating member internally equipped with a battery as in the above conventional vacuum heat-insulating panels, it is anticipated that sufficient electric power cannot be continually supplied in a manner enough to endure long-term operation, resulting in disabling the measurement shortly.

A second technical problem is as follows. In a situation where the inside of the vacuum heat-insulating member is kept at a pressure of about 1 Pa under vacuum, a force of about 10 t/m$^2$ is applied to the outer surface of the vacuum heat-insulating member, and thereby a large force is applied to respective surfaces of a sensor, a cable, a wireless transmitter and other built-in components, so that the vacuum heat-insulating member needs to be configured to be capable of protecting such built-in components.

A third technical problem is as follows. For example, in the JP 2012-136254A, it is described that any of various vacuum gages such as a Pirani vacuum gauge, a diaphragm vacuum gauge, a capacitance vacuum gauge, and a micromechanical vacuum gauge may be used as means for the pressure measurement. However, in terms of size, the Pirani and diaphragm vacuum gauges have difficulty in being inserted inside the vacuum heat-insulating member. Further, the capacitance vacuum gauge is insufficient in terms of accuracy, although there is a small-size capacitance vacuum gauge.

A fourth technical problem is as follows. With a view to bringing out vacuum performance, the vacuum heat-insulating member can be configured such that a large number of closed chambers (also called "closed pores" or "closed cells") are formed thereinside by fibers, thereby preventing the inflow of gas to suppress an influence of the thermal conductivity of gas. However, when an internal space of the vacuum heat-insulating member is excessively occupied by the sensor, the volume of the closed cells for preventing the inflow of gas is reduced and becomes insufficient. Thus, as compared to a case where there is no sensor, the internal pressure of the vacuum heat-insulating member raises, and thereby heat-insulating performance of the vacuum heat-insulating member is liable to decline. Therefore, it is desirable to reduce the size of the sensor as much as possible.

In order to solve all the above technical problems, the present invention provides a vacuum heat-insulating member which internally comprises: a pressure sensor which is a thermocouple vacuum sensor, or a piezoresistive vacuum sensor, or a crystal vacuum sensor (crystal gauge), or a combination of two or more of them; a battery; a battery charging unit; and a small-size wireless vacuum gauge comprising a transmission unit for transmitting measurement data including at least a pressure value, wherein the pressure sensor is formed by microelectromechanical system (MEMS) techniques, and the battery charging unit is configured to charge the battery without any electrical connection with an external power source.

[Solution to Technical Problem]

According to one aspect of the present invention, there is provided a vacuum heat-insulating member comprising a core, a gas barrier film entirely covering the core, and an outer layer provided outside the gas barrier film, wherein the vacuum heat-insulating member is configured to be internally depressurized and hermetically-sealed. The vacuum heat-insulating member comprises a small-size wireless vacuum gauge on an inner side with respect to the outer layer, wherein the small-size wireless vacuum gauge comprises at least: a pressure sensor; a battery for supplying electric power to the pressure sensor; a battery charging unit for charging the battery; and a transmission unit for transmitting measurement data including at least a pressure value measured by the pressure sensor, and wherein the pressure sensor is formed by microelectromechanical system (MEMS) techniques, and the battery charging unit comprises a charging mechanism configured to charge the battery without any electrical connection with an external power source. The small-size wireless vacuum gauge further comprises at least one of a temperature sensor, a humidity sensor, a sensor configured to measuring various molecular species, and an internal clock.

Preferably, in the vacuum heat-insulating member according to the one aspect of of the present invention, the battery charging unit comprises a Peltier element as the charging mechanism, and is configured to charge the battery based on electric power generated by the Seebeck effect as a result of being applied with heat from outside the vacuum heat-insulating member.

Preferably, in the vacuum heat-insulating member according to the one aspect of the present invention, the battery charging unit comprises an electric power receiving-side coil as the charging mechanism, and is configured to charge the battery based on non-contact electric power supply with respect to an electric power transmitting-side coil located outside the vacuum heat-insulating member.

More preferably, in the above vacuum heat-insulating member, the non-contact electric power supply is based on an electromagnetic induction method which is a method of transmitting electric power by means of an induction magnetic flux to be generated between the electric power receiving-side coil and the electric power transmitting-side coil.

Alternatively, in the above vacuum heat-insulating member, the non-contact electric power supply may be based on a magnetic field resonance method which is a method of transmitting electric power under magnetic field resonance induced by causing a current to flow through the transmitting-side coil comprised in an electric power transmitting side-resonant circuit, to generate a magnetic field oscillation, and causing the generated magnetic field oscillation to be transmitted to the receiving-side coil comprised in an electric power receiving side-resonant circuit configured to resonate at a same frequency as that of the transmitting side-resonant circuit.

Preferably, in the vacuum heat-insulating member according to the one aspect of the present invention, the pressure senor is a thermocouple vacuum sensor.

Preferably, in the vacuum heat-insulating member according to the one aspect of the present invention, the pressure senor is a piezoresistive vacuum sensor.

Preferably, in the vacuum heat-insulating member according to the one aspect of the present invention, the pressure senor is a crystal vacuum sensor.

Preferably, in the vacuum heat-insulating member according to the one aspect of the present invention, the pressure senor is a combination of two or more selected from the group consisting of a thermocouple vacuum sensor, a piezoresistive vacuum sensor and a crystal vacuum sensor.

Preferably, in the vacuum heat-insulating member according to the one aspect of the present invention, a volume of the small-size wireless vacuum gauge is 7.5% or less with respect to a total volume of the vacuum heat-insulating member.

More preferably, in the above vacuum heat-insulating member, the volume of the small-size wireless vacuum gauge is 5.0% or less with respect to the total volume of the vacuum heat-insulating member.

Preferably, in the vacuum heat-insulating member according to the one aspect of the present invention, a thickness of the small-size wireless vacuum gauge is 12 mm or less.

Preferably, the vacuum heat-insulating member according to the one aspect of the present invention has a thickness of equal to or less than 25 mm, and greater than a thickness of the small-size wireless vacuum gauge.

Preferably, in the vacuum heat-insulating member according to the one aspect of the present invention, the transmission unit is configured to transmit the measurement data, wirelessly in a sub-giga band of less than 1 GHz, or wirelessly in a 2.4 GHz band, or wirelessly in a 5 GHz band.

[Effect of Invention]

The vacuum heat-insulating member according to the one aspect of the present invention is provided with the battery charging unit comprising a charging mechanism configured to charge the battery without any electrical connection with an external power source, so that it is possible to continually supply sufficient electric power in a manner enough to endure long-term operation. Further, the pressure sensor of the small-size wireless vacuum gauge comprised in the vacuum heat-insulating member is formed by MEMS techniques, wherein the vacuum heat-insulating member is configured such that the volume of the small-size wireless vacuum gauge is preferably 7.5% or less, more preferably 5.0% or less, with respect to the total volume of the vacuum heat-insulating member, so that the surface area of the small-size wireless vacuum gauge is reduced. This makes it possible to lower a force to be applied to the small-size wireless vacuum gauge under vacuum, thereby protecting the small-size wireless vacuum gauge.

Further, the small-size wireless vacuum gauge is configured to be reduced in size as much as possible, as mentioned above, so that it is possible to avoid excessively occupying a space for a large number of closed cells formed by fibers inside the vacuum heat-insulating member, thereby ensuring the volume of closed cells enough to prevent an inflow of gas and thus deterioration in heat-insulating performance. Further, as the pressure sensor of the small-size wireless vacuum gauge comprised in the vacuum heat-insulating member, a thermocouple vacuum sensor, or a piezoresistive vacuum sensor, or a crystal vacuum sensor, or a combination of two or more of them, is employed, so that even the small-size wireless vacuum gauge can realize a measurement accuracy equal to that a large-size vacuum gage such as a Pirani vacuum gauge which has difficulty in being inserted inside the vacuum heat-insulating member.

BRIEF DESCRIPTION OF DRAWINGS

FIG. 1 is a block diagram showing the configuration of components of a small-size wireless vacuum gauge comprised in a vacuum heat-insulating member according to one embodiment of the present invention.
FIG. 2 is a block diagram showing the arrangement of devices for an accuracy checking test of the small-size wireless vacuum gauge.
FIG. 3 is a graph showing a result of the accuracy checking test of the small-size wireless vacuum gauge.
FIG. 4 is a graph showing a result of a long-term heat-insulating performance test of the vacuum heat-insulating member.

DESCRIPTION OF EMBODIMENTS

With reference to the drawings, one embodiment of the present invention will be described below. In all figures for explaining the embodiment, as a general rule, the same component is assigned with the same reference sign, and repetitive description thereof will be omitted.

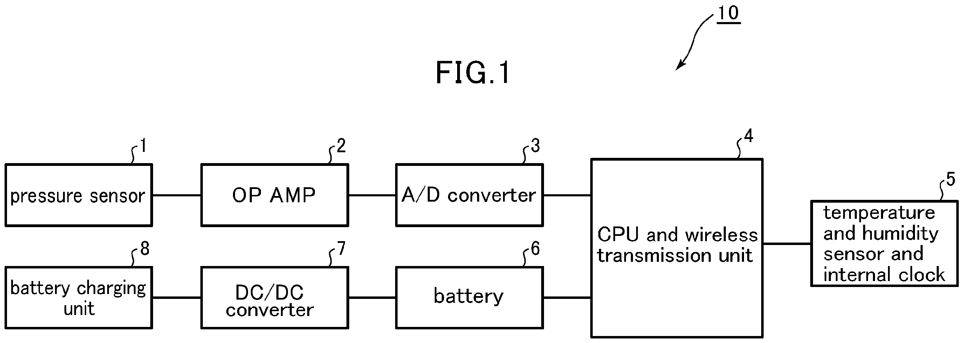

FIG. 1 is a block diagram showing the configuration of components of a small-size wireless vacuum gauge comprised in a vacuum heat-insulating member according to one embodiment of the present invention. In the embodiment shown in FIG. 1, the small-size wireless vacuum gauge 10 comprises a pressure sensor 1, an operational amplifier 2, an A/D converter 3, a CPU and wireless transmission unit 4, a temperature and humidity sensor and internal clock 5, a battery 6, a DC/DC converter 7, and a battery charging unit 8.

The pressure sensor 1 is operable to measure an internal pressure of the vacuum heat-insulating member, and the operational amplifier 2 is connected to the pressure sensor 1 and operable to amplify an analog signal of a pressure value measured by the pressure sensor 1. The A/D converter 3 is connected to the operational amplifier 2 and operable to convert the amplified analog signal into a digital signal. The CPU and wireless transmission unit 4 is connected to the A/D converter 3 and operable to receive the digital signal, and transmit the received digital signal to an external receiving unit (not shown) as measurement data, wirelessly in a sub-giga band of less than 1 GHz, or wirelessly in a 2.4 GHz bond, or wirelessly in a 5 GHz band.

The frequency band of the CPU and wireless transmission unit 4 is freely selectable as long as it is a wirelessly transmittable frequency band. However, from a viewpoint of transmission distance, it is preferably set to a range equal to or less than 1 GHz. A 920 MHz band uses a part of the ISM (Industrial, Scientific and Medical) band, and requires a large electric power consumption per transmission. On the other hand, as compared to a radio wave in the 2.4 GHz band, a radio wave in the 920 MHz band has higher diffraction ability, so that it can be communicably transmitted while going around an obstacle. Further, the radio wave in the 920 MHz band has a longer reachable distance, so that it can be transmitted by several meters from the surface of an outer layer of the vacuum heat-insulating member.

On the other hand, in a communication method using the radio wave in the 2.4 MHz band including BLE (Bluetooth (trademark) Low Energy) communication, electric power consumption is relatively small, but the reachable distance of the radio wave is typically about 5 cm from the surface of the outer layer of the vacuum heat-insulating member. Although such a measurement becomes difficult in a case where the vacuum heat-insulating member is installed inside a wall, the vacuum heat-insulating member can be used in a situation where the thickness of the wall is sufficiently thin, or the surface thereof is exposed to the outside from the wall.

The external receiving unit is operable to record a measured voltage upon receiving of the measurement data, and convert it to a pressure value, using a conversion factor of a known calibration value (voltage/pressure). For example, the pressure value to be output through the conversion is calculated according to a program executed in the receiving unit.

The pressure sensor 1 may be composed of a thermocouple vacuum sensor formed by microelectromechanical system (MEMS) techniques. The pressure sensor 1 may also be composed of a thermocouple vacuum sensor formed by MEMS techniques.

The temperature and humidity sensor and internal clock 5 is connected to the CPU and wireless transmission unit 4, and operable to transmit a signal directly to the CPU by, e.g., serial communication such as I2C (Inter-Integrated Circuit) communication. The CPU and wireless transmission unit 4 is operable to wirelessly transmit the signal from the temperature and humidity sensor and internal clock 5, to the external receiving unit. Here, the internal pressure of the vacuum heat-insulating member can be measured without temperature and humidity sensors. Thus, if not necessary, the temperature and humidity sensors may be eliminated from the components of the small-size wireless vacuum gauge 10. That is, the temperature and humidity sensors may be comprised in the small-size wireless vacuum gauge 10, depending on a need for checking the presence or absence of a problem in the pressure of water vapor intruding inside the vacuum heat-insulating member. Further, a sensor for measuring various molecular species (carbon dioxide, carbon monoxide, oxygen, VOC (volatile organic compound), etc.) may also be comprised in the small-size wireless vacuum gauge 10. In other words, the small-size wireless vacuum gauge 10 may further comprise at least one of a temperature sensor, a humidity sensor, a sensor for measuring various molecular species, and an internal clock.

The battery 6 is connected to the CPU and wireless transmission unit 4, and operable to supply electric power to the CPU and wireless transmission unit 4 and other components (elements) electrically connected to the unit 4. The battery 6 is also connected to the battery charging unit 8 via the DC/DC converter 7, and the battery charging unit 8 is operable to supply electric power for charging the battery 6. The DC/DC converter 7 is operable to convert a voltage obtained from the battery charging unit 8 into a voltage necessary to charge the battery 6.

In the battery charging unit 8, a Peltier element or a non-contact electric power supplying coil may be employed as a charging mechanism thereof. In the case where the Peltier element is used as the charging mechanism of the battery charging unit 8, electric power can be generated by the Seebeck effect as a result of applying heat to the Peltier element, and supplied to the battery 6 via the DC/DC converter 7. For example, when an 85 mAh small-size lithium-ion polymer (LiPo) battery is employed as the battery 6, charging of the small-size LiPo battery can be completed by applying heat at a temperature of 80°C to the Peltier element of the battery charging unit 8 for about 5 minutes. As long as the time period of the application of heat at a temperature of 80°C is about 5 minutes, charging can be completed substantially without damaging the vacuum heat-insulating member.

On the other hand, in the case where the non-contact electric power supplying coil is used as the charging mechanism, the battery charging unit 8 is operable to supply electric power generated by an electromagnetic induction method or a magnetic field resonance method, to the battery 6 via the DC/DC converter 7. For example, in the electromagnetic induction method, the battery charging unit 8 is comprised in an electric power receiving-side coil, wherein the battery charging unit 8 is operable to receive electric power generated based on an electromagnetic flux generated between the electric power receiving-side coil and an electric power transmitting-side coil comprised in an external battery charger outside the vacuum heat-insulating member.

On the other hand, in the magnetic field resonance method, the electric power receiving-side coil is comprised in an electric power receiving-side resonant circuit, and the electric power transmitting-side coil is comprised in an electric power transmitting-side resonant circuit. The battery charging unit 8 is operable to receive electric power which is generated under magnetic field resonance induced by causing a current to flow through the transmitting-side coil comprised in the electric power transmitting side-resonant circuit of the external battery charger, to generate a magnetic field oscillation, and causing the generated magnetic field oscillation to be transmitted to the receiving-side coil comprised in the electric power receiving side-resonant circuit configured to resonate at the same frequency as that of the transmitting side-resonant circuit.

The small-size wireless vacuum gauge 10 is provided inside the vacuum heat-insulating member which is internally depressurized and hermetically-sealed. The vacuum heat-insulating member comprises a core, a gas barrier film entirely covering the core, and an outer layer provided outside the gas barrier film, wherein the small-size wireless vacuum gauge 10 is provided on the inner side with respect to the outer layer of the vacuum heat-insulating member, preferably on the inner side with respect to the gas barrier film of the vacuum heat-insulating member.

As above, the small-size wireless vacuum gauge 10 is provided with the battery charging unit comprising the charging mechanism capable of charging the battery without any electrical connection with an external power source. Thus, although the small-size wireless vacuum gauge 10 is built in the vacuum heat-insulating member, it is possible to continually supply electric power in a manner enough to endure long-term operation.

As the core of the vacuum heat-insulating member, any core used in the field of vacuum heat-insulating members may be used without any particular restriction. Specific example of the core may include open-cell rigid polyurethane foam, inorganic fibers, organic fibers, inorganic powder, and aerogel. From a viewpoint of handling and heat-insulating property, it is preferable to use inorganic fibers formed in a sheet shape. Examples of the inorganic fibers include glass fibers, ceramic fibers such as alumina fibers or silica fibers, slag wool fibers, and rock wool fibers. Among them, from a viewpoint of heat-insulating property, formability/processability, and the like, it is preferable to use glass fibers. Here, with a view to improving heat resistance of the core, heat-resistant metal fibers such as fibers of stainless steel, chromium-nickel based alloy, high nickel alloy or high cobalt alloy may be added in a small amount. Such a core is publicly known, and easily available on the market or can be prepared.

In the vacuum heat-insulating member according to this embodiment, an adsorbent may be enclosed in the bag-shaped gas barrier film together with the core. For example, the adsorbent is a substance capable of absorbing gas such as nitrogen, oxygen and/or carbon dioxide, and/or water. Examples of the adsorbent include calcium oxide, silica gel, zeolite, activated carbon, barium oxide, barium-lithium alloy, or a mixture of two or more of them. From a viewpoint of gas adsorption performance and productivity, it is preferable to use calcium oxide. Such an adsorbent is publicly known, and easily available on the market or can be prepared.

Although the gas barrier film usable in the present invention is not particularly limited as long as it has a gas barrier property, it may be formed preferably as a laminate of a sealing layer and a gas barrier layer, more preferably as a laminate of a sealing layer, a gas barrier layer and at least one resin film layer, which are arranged in this order from a side in contact with the core. Although the thickness of the gas barrier film is not particularly limited, it may be typically 50 to 200 $\mu$m, preferably 60 to 180 $\mu$m.

The gas barrier layer is a gas-impermeable layer, and used from a viewpoint of preventing lowering of the degree of vacuum in the vacuum heat-insulating member. Examples of the gas barrier layer include a metal foil, or a vapor-deposited film obtained by forming a vapor-deposited coating on a resin film. The vapor-deposited film is obtained by forming a vapor-deposited coating on a substrate by a vapor deposition process, a sputtering process or the like. From a viewpoint of gas barrier property and economic efficiency, in both the metal foil and the vapor-deposited film, it is preferable to use aluminum.

As a resin film serving as the substrate of the vapor-deposited film, it is possible to use a film produced from: an aromatic polyester-based resin such as polyethylene terephthalate (PET), or polybutylene terephthalate (PBT); a polyolefin-based resin such as polyethylene, polypropylene, or olefin copolymer; a vinyl chloride-based resin such as polyvinyl chloride, or vinyl chloride copolymer; a polyamide resin such as nylon 6, nylon 66, or meta-xylylenediamine-adipic acid condensate; a styrene-based resin such as acrylonitrile-butadiene-styrene copolymer, or acrylonitrile-styrene copolymer; a thermoplastic resin such as an acrylic-based resin including polymethylmethacrylate or acrylic acid ester-methacrylic acid ester copolymer, ethylene-vinyl alcohol copolymer, or a substance obtained by partially saponifying polyvinyl alcohol and polyvinyl acetate; or a thermosetting resin such as phenolic resin or urea resin.

In the case where the metal foil is used as the gas barrier film, although the thickness of the metal foil is not particularly limited, it may be 1 to 60 μm, preferably 5 to 30 μm. As long as the thickness is equal to or greater than 1 μm, the metal foil has high strength enough to suppress formation of pinholes. In the case where the vapor-deposited film is used as the gas barrier film, the thickness of the vapor-deposited film may be 10 to 60 μm, preferably 12 to 30 μm, wherein the thickness of the vapor-deposited coating may be 0.2 to 3.0 μm, preferably 0.5 to 2.0 μm. As long as the thickness of the vapor-deposited coating is equal to or greater than 0.2 μm, the vapor-deposited film can bring out the gas barrier property. Further, as long as the thickness of the vapor-deposited coating is equal to or less than 3.0 μm, there is no significant technical difficulty in formation of the vapor-deposited coating. Such a metal foil or a vapor-deposited film usable as the gas barrier layer is publicly known, and easily available on the market or can be prepared.

The sealing layer is made of a resin which can be fused by heating. That is, the material of the sealing layer is not particularly limited as long as it is a thermally fusable resin. Specifically, it is possible to use a film made of: a polyolefin resin such as polyethylene, or polypropylene; polyacrylonitrile; PET; ethylene-vinyl alcohol copolymer; or a mixture of two or more of them. Among them, it is preferable to use polyethylene, polypropylene or ethylene-vinyl alcohol copolymer. Preferably, the polyethylene is of a type having a density of 0.90 to 0.98 $g/cm^3$. Preferably, the polypropylene is of a type having a density of 0.85 to 0.95 $g/cm^3$. Although the thickness of the sealing layer is not particularly limited, it may be typically 10 to 100 μm, preferably 25 to 60 μm. Such a resin usable in the sealing layer is publicly known, and easily available on the market or can be prepared.

The resin film layer is a layer optionally provided on the gas barrier layer for the purpose of protecting the gas barrier layer. As the resin film layer, it is possible to use a film produced from: an aromatic polyester-based resin such as polyethylene terephthalate (PET), or polybutylene terephthalate (PBT); a polyolefin-based resin such as polyethylene, polypropylene, or olefin copolymer; a vinyl chloride-based resin such as polyvinyl chloride, or vinyl chloride copolymer; a polyamide resin such as nylon 6, nylon 66, or meta-xylylenediamine-adipic acid condensate; a styrene-based resin such as polyvinyl alcohol, acrylonitrile-butadiene-styrene copolymer, or acrylonitrile-styrene copolymer; a thermoplastic resin such as an acrylic-based resin including as polymethylmethacrylate or acrylic acid ester-methacrylic acid ester copolymer; or a thermosetting resin such as phenolic resin or urea resin. Among them, it is preferable to use PET, nylon 6, or nylon 66. An organic or inorganic filler may be added to each of the above resins. These resins may be used independently or in the form of a mixture of two or more of them. In order to further improve the gas barrier performance of the gas barrier film, a gas barrier resin obtained by polymerizing or copolymerizing vinyl monomers such as vinylidene chloride, acrylonitrile and/or vinyl alcohol may be applied or laminated to the resin film layer, or particles thereof may be mixed and dispersed in the resin film layer. Although the thickness of the resin film layer is not particularly limited, it may be typically 5 to 40 μm, preferably 10 to 30 μm. Such resins usable in the resin film layer are publicly known, and easily available on the market or can be prepared.

The gas barrier film is formed in a bag shape. The term "bag shape" means a shape capable of containing the core and the absorbent therein. A process of forming the bag-shaped gas barrier film is not particularly limited. For example, in the case where the gas barrier film has the sealing layer, the gas barrier film is provided by the number of two, wherein the two gas barrier films are superimposed on each other such that the sealing layers thereof come into contact with each other, and the periphery of a region for receiving the core and the absorbent is heat-sealed, except for an opening portion for insertion of the core and the absorbent, thereby forming the bag-shaped gas barrier film.

The outer layer usable in the present invention is made of paper and/or non-woven fabric. The term "paper" means a product obtained by agglutinating plant fibers or other fibers. Both organic fibers and inorganic fibers may be used as a material for the paper. Examples of the organic fibers usable as a material for the paper include plant-derived fibers, and synthetic fibers, and examples of the inorganic fibers usable as a material for the paper include fibers made of mineral or metal, and synthetic fibers. The term "non-woven fabric" means a fiber sheet, a web or a butt in which filaments are oriented in one direction or in a random manner, and fibers are joined to each other by interlacement and/or fusion bonding and/or adhesive bonding. Both organic fibers and inorganic fibers may be used as a material for the non-woven fabric.

The organic fibers serving as a material for the non-woven fabric include natural fibers and chemical fibers. Examples of the natural fibers include cotton fibers, wool fibers, felt fibers, hemp fibers, pulp fibers, and silk fibers, and examples of the chemical fibers include rayon fibers, polyamide fibers, polyester fibers, polypropylene fibers, acrylic fibers, vinylon fibers, aramid fibers, and acetate fibers. The inorganic fibers serving as a raw material for the non-woven fabric include glass fibers, carbon fibers, and mineral fibers. Among them, a preferred material is polyamide fibers, polyester fibers, or polypropylene fibers. Such a paper and a non-woven fabric are publicly known, and easily available on the market or can be prepared.

The thickness of the outer layer is 0.01 mm to 3 mm, preferably 0.03 to 0.5 mm. Although the per-unit-area weight of the outer layer is not particularly limited, it may be preferably 10 to 200 $g/m^2$, more preferably 20 to 100 $g/m^2$.

For example, the outer layer is bonded to one sider of the gas barrier film which is not in contact with the core (outside the vacuum heat-insulating member) by a lamination method. Examples of the lamination method include dry lamination, extrusion lamination, hot melt lamination, wet lamination, and thermal lamination.

The vacuum heat-insulating member according to this embodiment has a plate shape. The term "plate shape" means a thin and flat shape which has opposed two surfaces and a side peripheral surface connecting the two surfaces. The outer layer defines at least one surface of the plate-shaped vacuum heat-insulating member. Preferably, it covers a peripheral edge of one surface of the gas barrier film to be disposed on the side of a heat source during use, in a frame pattern. Further, the outer layer preferably defines the side peripheral surface of the vacuum heat-insulating member, more preferably defines the entire surface (i.e., all the opposed surfaces and the side peripheral surface) of the vacuum heat-insulating member. In a case where a plurality of the vacuum heat-insulating members are used in combination, it is advantageous to define the side peripheral surface by the outer layer so as to prevent heat leakage through a join area between adjacent ones of the vacuum heat-insulating members.

The vacuum heat-insulating member of the present invention will be described in more detail below, based on Examples. However, it should be understood that the present invention is not limited to the following Examples.

[EXAMPLES]

Accuracy Checking Test of Small-Size Wireless Vacuum Gauge

A small-size wireless vacuum gauge which is substantially the same as the small-size wireless vacuum gauge 10 illustrated in the block diagram of FIG. 1 was prepared, and a thermocouple vacuum sensor fabricated by MEMS techniques was employed as the pressure sensor 1 . LTC3105 manufactured by Linear Technologies Inc., was employed as the DC/DC converter 7. This DC/DC converter is a step-up converter capable of being started by a small voltage of 250 mV, and of raising voltage up to 5.0 V. As the battery 6, any type of battery may be employed as long as it is free of over discharge. In the Examples, an 85 mAh small-size lithium-ion polymer (LiPo) battery was employed a small-size lithium-ion. There is a relationship that the capacity of a LiPo battery increases as the size of the LiPo battery becomes larger. In the Examples, a LiPo battery having a discharged capacity of 85 mAh was employed, from a viewpoint of suppressing an increase in size so as to realize the small-size wireless vacuum gauge 10 capable of being provided inside the vacuum heat-insulating member. It should be understood that the size of a LiPo battery may be changed, i.e., a LiPo battery having a different capacity may be selected, as long as it does not hinder the heat-insulating performance of the vacuum heat-insulating member.

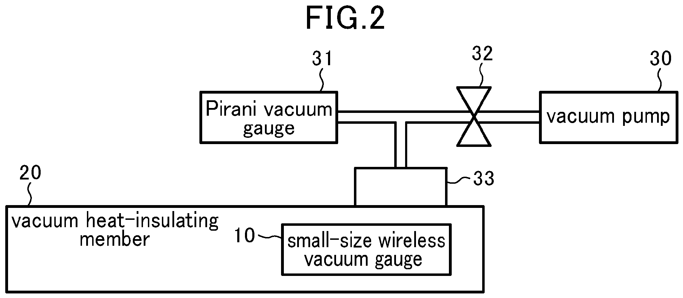

After installing the small-size wireless vacuum gauge inside the vacuum heat-insulating member, a vacuuming or evacuation port is provided in the vacuum heat-insulating member, and a pipe line was connected to the evacuation port, as shown in FIG. 2. FIG. 2 is a block diagram showing the arrangement of devices for an accuracy checking test of the small-size wireless vacuum gauge. The pipe line was connected to the evacuation port of the vacuum heat-insulating member 20 through a connection jig 33. The process of the accuracy checking test of the small-size wireless vacuum gauge is as follows.

1) A vacuum value 32 is opened, and a vacuum pump 30 is activated to depressurize the inside of the vacuum heat-insulating member.
2) After continuing vacuuming until the internal pressure of the vacuum heat-insulating member 20 reaches 0.5 Pa, the valve 32 is closed once.
3) Subsequently, the valve 32 is gradually opened to adjust the internal pressure of the vacuum heat-insulating member 20, and respective values output from a Pirani vacuum gauge 31 and the small-size wireless vacuum gauge 10 are compared with each other.

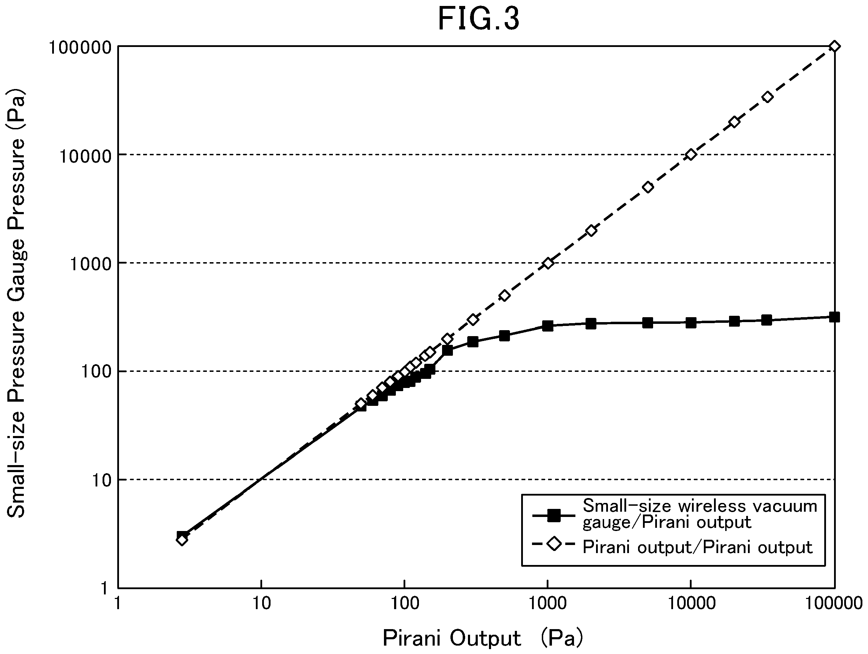

A graph plotting a relationship between the output value of the small-size wireless vacuum gauge 10 and the output value of the Pirani vacuum gauge as a result of the accuracy checking test of the small-size wireless vacuum gauge is shown in FIG. 3. FIG. 3 is a graph showing the result of the accuracy checking test of the small-size wireless vacuum gauge. In this graph, the vertical axis represents a pressure in the small-size wireless vacuum gauge (small-size pressure gauge pressure) (Pa), and the horizontal axis represents a pressure in the Pirani vacuum gauge (Pirani output) (Pa). A line plotted by squares (a) represents a value obtained by dividing the pressure in the small-size wireless vacuum gauge by the pressure in the Pirani vacuum gauge (small-size wireless vacuum gauge/Pirani output), and a line plotted by rhomboids (◊) represents a value obtained by dividing the pressure in the Pirani vacuum gauge by the pressure in the Pirani vacuum gauge (Pirani output/Pirani output).

The line plotted by rhomboids (◊) represents the value of Pirani output/Pirani output, so that it is a straight line representing 1.0. The Pirani vacuum gauge 31 is disposed outside the vacuum heat-insulating member 20, and capable of measuring the internal pressure of the vacuum heat-insulating member 20 with a high degree of accuracy. Thus, a value measured by the Pirani vacuum gauge 31 can be deemed as an ideal value to be measured by the small-size wireless vacuum gauge 10. If a value measured by the small-size wireless vacuum gauge 10 disposed inside the vacuum heat-insulating member 20 becomes equal to a value measured by the Pirani vacuum gauge 31, the value of small-size wireless vacuum gauge/Pirani output on the line output plotted by squares (a) also becomes 1.0. That is, if the value of small-size wireless vacuum gauge/Pirani output on the line output plotted by squares (■) comes close to the value of Pirani output/Pirani output on the line plotted by rhomboids (◊), it means that a value measured by the small-size wireless vacuum gauge 10 is close to an ideal value (a value measured by the Pirani vacuum gauge 31).

As shown in FIG. 3, in the result of the accuracy checking test of the small-size wireless vacuum gauge 10, pressure values of up to about 300 Pa indicated by the small-size wireless vacuum gauge 10 are approximately coincident with pressure values indicated by the Pirani vacuum gauge 31. That is, in a pressure range of about 0 Pa to about 300 Pa, it is possible to accurately measure the degree of vacuum inside the vacuum heat-insulating member, and predict a thermal conductivity from the measured degree of vacuum. In a fiber-based vacuum heat-insulating member, the durable life thereof in terms of the heat-insulating performance is considered to be ensured as long as the measurement accuracy is ensured in the above pressure range. Here, in a case where it is necessary to measure a large pressure beyond the above pressure range, it is preferable to employ a piezoresistive vacuum sensor fabricated by MEMS techniques. The piezoresistive vacuum sensor fabricated by MEMS techniques is capable of obtaining sufficient accuracy in a measurement of a pressure of about 700 Pa or more, although it is inaccurate or insufficient in terms of measurements in a high vacuum region.

Instead of the Pirani vacuum gauge and the piezoresistive vacuum sensor, a crystal vacuum sensor (crystal gauge) may be used as the pressure sensor 1. Generally, the crystal vacuum sensor is capable of performing measurements in a wide range from atmospheric pressure to $1 \times 10^{-2}$ Pa, with high repeatability and high stability around atmospheric pressure, through the use of a phenomenon that a resonance impedance of a crystal oscillator varies according to pressures. As one preferred embodiment, as the pressure sensor 1, it is possible to use a combination of two or more selected from the group consisting of the thermocouple vacuum sensor, the piezoresistive vacuum sensor and the crystal vacuum sensor.

As above, the thermocouple vacuum sensor or the piezoresistive vacuum sensor or the the crystal vacuum sensor or a combination of two or more thereof is employed as the pressure sensor of the small-size wireless vacuum gauge comprised in the vacuum heat-insulating member, so that even the small-size wireless vacuum gauge can realize measurement accuracy equal to that of a large-size vacuum gage such as the Pirani vacuum gauge having difficulty in being inserted inside the vacuum heat-insulating member.

Long-Term Heat-Insulating Performance Test of Vacuum Heat-Insulating Member with Small-Size Wireless Vacuum Gauge

Generally, the vacuum heat-insulating member is configured such that, when air penetrates into the inside thereof, movement of the air is hindered by closed cells formed among fibers (or particles). However, the sensor inserted inside the vacuum heat-insulating member collapses a part of the cells corresponding to the volume of the sensor. This is likely to cause a problem in terms of long-term performance. In this test, each of a plurality of sensors prepared correspondingly to the small-size wireless vacuum gauge 10 and having different sizes (volumes) was inserted inside the vacuum heat-insulating member, and the degree of deterioration in the heat-insulating performance was checked. Outline of the size of a sample of the vacuum heat-insulating member, the size of each of the sensors, materials of the vacuum heat-insulating member, a production method and others is shown in the following Table 1.

TABLE 1

| Items | Content |
|---|---|
| Sample size of vacuum heat-insulating member | Length 400mm $\times$ Breadth 700mm $\times$ Thickness 15mm |
| Sensor size (sensors were produced while battery size and substrate size were changed. Volume depends on casing for containing sensor) | Sensor 1: $1.9 \times 10^{-5} \text{m}^3$<br>Sensor 2: $9.6 \times 10^{-5} \text{m}^3$<br>Sensor 3: $2.1 \times 10^{-5} \text{m}^3$<br>Sensor 4: $3.1 \times 10^{-4} \text{m}^3$<br>Sensor 5: $4.2 \times 10^{-4} \text{m}^3$ |
| Core | Glass wool (glass fibers) |
| Film | Multi-layer laminate film having aluminum foil as barrier layer |
| Absorbent | Water absorbent. A part of sensors are equipped with gas absorbent |

(continued)

| Items | Content |
|---|---|
| Production conditions | Produced by holding vacuum state at 2 Pa or less for 3 min. Reached pressure of vacuum chamber was 0.5 Pa. |
| Aging conditions | In 90°C heating environment |

In Table 1, "aging" means a technique of accelerating deterioration in performance of the vacuum heat-insulating member. Typically, it is performed by heating at high temperature.

A list of test samples of vacuum heat-insulating members produced for the long-term heat-insulating performance test is shown in the following Table 2. A test sample of a vacuum heat-insulating member No.1 is a simple vacuum heat-insulating member without any built-in sensor, in which a water absorbent (CaO 20g) is used. Test samples of vacuum heat-insulating members Nos. 2 to 6 are vacuum heat-insulating members each having a respective one of built-in sensors 1 to 5 and using the water absorbent. Test samples of vacuum heat-insulating members Nos. 7 to 11 are vacuum heat-insulating members each having a respective one of the built-in sensors 1 to 5 and using a gas absorbent (5 g) in addition to the water absorbent.

TABLE 2

| Vacuum heat-insulating member No. | Sensor | Core | Film | Water absorbent | Gas absorbent |
|---|---|---|---|---|---|
| 1 | Without | Class wool | Multi-layer laminate film having aluminum foil as barrier layer | CaO 20g | Without |
| 2 | Sensor 1 | | | CaO 20g | Without |
| 3 | Sensor 2 | | | CaO 20g | Without |
| 4 | Sensor 3 | | | CaO 20g | Without |
| 5 | Sensor 4 | | | CaO 20g | Without |
| 6 | Sensor 5 | | | CaO 20g | Without |
| 7 | Sensor 1 | | | CaO 20g | Gas absorbent 5g |
| 8 | Sensor 2 | | | CaO 20g | Gas absorbent 5g |
| 9 | Sensor 3 | | | CaO 20g | Gas absorbent 5g |
| 10 | Sensor 4 | | | CaO 20g | Gas absorbent 5g |
| 11 | Sensor 5 | | | CaO 20g | Gas absorbent 5g |

The test samples of the vacuum heat-insulating members Nos. 1 to 11 were subjected to aging for 14 days under aging conditions as shown in Table 1. Values of the thermal conductivity (W/mk) in each of the test samples on the 0th day, the 7th day and the 14th day of the aging-based long-term heat-insulating performance test, and performance evaluation result of each of the test samples, are shown in the following Table 3.

TABLE 3

| | Thermal Conductivity (W/mK) | | | Performance Evaluation |
|---|---|---|---|---|
| Vacuum heat-insulating member No. | 0th day | 7th day | 14thday | ◎○△ |
| 1 | 0.00151 | 0.00213 | 0.00256 | - |
| 2 | 0.00154 | 0.00212 | 0.00253 | ○ |
| 3 | 0.00152 | 0.0022 | 0.00259 | ○ |
| 4 | 0.0016 | 0.00225 | 0.0026 | ○ |
| 5 | 0.0017 | 0.00235 | 0.0027 | ○ |
| 6 | 0.00165 | 0.0024 | 0.00291 | △ |
| 7 | 0.0013 | 0.0017 | 0.002 | ◎ |
| 8 | 0.0013 | 0.00178 | 0.00201 | ◎ |
| 9 | 0.0015 | 0.0018 | 0.00202 | ◎ |
| 10 | 0.0015 | 0.00185 | 0.0021 | ◎ |
| 11 | 0.00155 | 0.002 | 0.0024 | ○ |

In the judgment of the performance evaluation in Table 3, "◎" means that the test sample has a thermal conductivity sufficiently better than that of the test sample of the vacuum heat-insulating member No.1 without any built-in sensor on the 14th day (e.g., has a thermal conductivity lower than that of the test sample of the vacuum heat-insulating member No.1 by 0.0002 or more). "○" means that the test sample has a thermal conductivity equal to that of the test sample of the vacuum heat-insulating member No.1 without any built-in sensor on the 14th day (e.g., has a thermal conductivity equal to that of the test sample of the vacuum heat-insulating member No. 1 $\pm$ less than 0.0002). "△" means that the test sample has a thermal conductivity higher than that of the test sample of the vacuum heat-insulating member No.1 without any built-in sensor on the 14th day (e.g., has a thermal conductivity higher than that of the test sample of the vacuum heat-insulating member No.1 by 0.0002 or more).

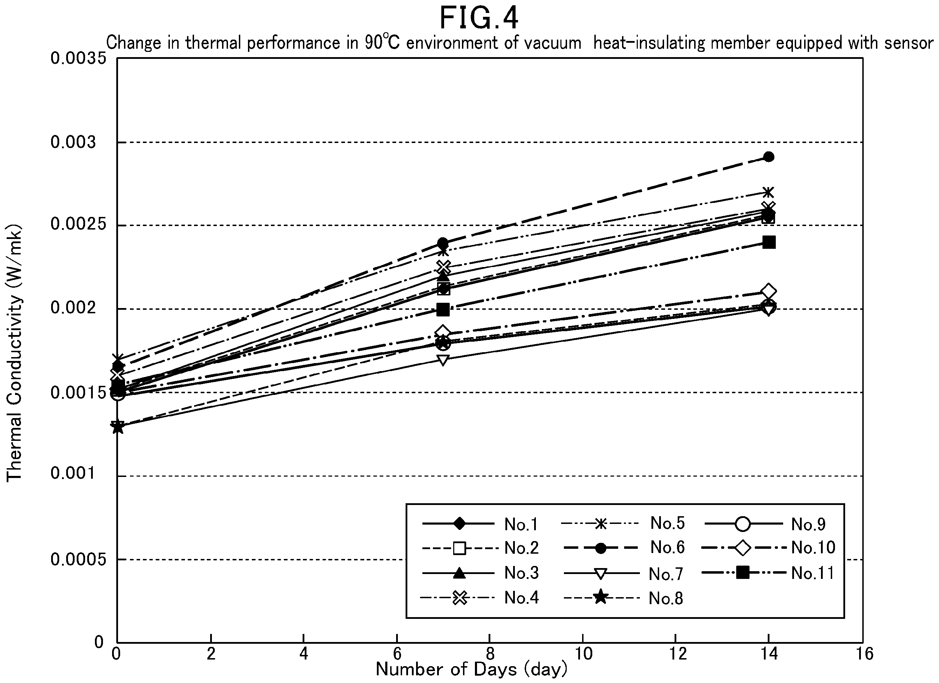

FIG. 4 is a graph showing the result of the long-term heat-insulating performance test of the vacuum heat-insulating member. A line graph illustrated in FIG. 4 indicates values of the thermal conductivity (W/mK) in each of the test samples on the 0th day, the 7th day and the 14th day of the aging-based long-term heat-insulating performance test. In view of the changes in values of the thermal conductivity in Tables 3 and 4, the performance evaluation of each of the test samples of the vacuum heat-insulating members Nos. 2 to 5 each having a respective one of the built-in sensors 1 to 4 is "O", which shows that aging causes approximately the same performance deterioration as that in the test sample of the vacuum heat-insulating member No. 1 without any built-in sensor.

The performance evaluation of the test sample of the vacuum heat-insulating member No. 6 having the built-in sensor 5 is "△". Specifically, as compared with the test sample of the vacuum heat-insulating member No. 1 without any built-in sensor, a slight performance deterioration was observed. On the other hand, the performance evaluation of the test sample of the vacuum heat-insulating member No. 11 having the built-in sensor 5 and using the gas absorbent is "○". Specifically, as a result of using the gas absorbent, an improvement in the heat-insulating performance was observed. Similarly, the performance evaluation of the test sample of each of the vacuum heat-insulating members Nos. 7 to 10 each having a respective one of the built-in sensors 1 to 4 and using the gas absorbent is " ◎". Specifically, the thermal conductivity was lowered than that of the test sample of the vacuum heat-insulating member No. 1 without any built-in sensor, and an improvement in the heat-insulating performance was observed.

A volume rate of each of the sensors 1 to 5 with respect to the vacuum heat-insulating member is as the following Table 4. The volume rate in Table 4 is a value obtained by subtracting the volume of the sensor (each of the sensors 1 to 5) from the volume of the vacuum heat-insulating member, and dividing the resulting difference by the volume of the vacuum heat-insulating member.

That is,

Volume rate = (the volume of the vacuum heat-insulating member – the volume of the sensor)/ (the volume of the vacuum heat-insulating member)

TABLE 4

|  | Volume (m$^3$) | Volume Rate |
| --- | --- | --- |
| Vacuum heat-insulating member | 0.0042 | - |
| Sensor 1 | 0.000019 | 0.995 |
| Sensor 2 | 0.000096 | 0.977 |
| Sensor 3 | 0.00021 | 0.950 |
| Sensor 4 | 0.00031 | 0.926 |
| Sensor 5 | 0.00042 | 0.900 |

Considering the result of the performance evaluation in Table 3 and the volume rate in Table 4, in specifications of the vacuum heat-insulating member using the gas absorbent, the sensor is operable even when the size (volume) of the sensor is only 10% of the volume of the vacuum heat-insulating member. On the other hand, in a case where it is necessary to further satisfy specifications of the vacuum heat-insulating member using no gas absorbent, the size (volume) of the sensor is preferably set to 7.5% or less, more preferably 5.0% or less, of the volume of the vacuum heat-insulating member.

When actually used, the small-size wireless vacuum gauge 10 is equipped with the battery charging unit 8 and others in addition to the pressure sensor, so that it has a volume which is about 2.5 times the volume of the sensor 1 in Table 4 (about $4.75 \times 10^{-5}$ m$^3$). Thus, the size (volume) of the vacuum heat-insulating member is preferably determined such that the volume rate is 7.5% or less, preferably 5.0% or less, as mentioned above. That is, in one embodiment of the present invention, the volume of the small-size wireless vacuum gauge is 7.5% or less, preferably 5.0% or less, with respect to the total volume of the vacuum heat-insulating member.

As above, the pressure sensor of the small-size wireless vacuum gauge comprised in the vacuum heat-insulating member is formed by MEMS techniques, wherein the vacuum heat-insulating member is configured such that the volume of the small-size wireless vacuum gauge is 7.5% or less, preferably 5.0% or less, with respect to the total volume of the vacuum heat-insulating member, so that the surface area of the small-size wireless vacuum gauge is reduced. This makes it possible to lower a force to be applied to the small-size wireless vacuum gauge under vacuum, thereby protecting the small-size wireless vacuum gauge. Further, the small-size wireless vacuum gauge is configured to be reduced in size as much as possible, as mentioned above, so that it is possible to avoid excessively occupying a space for a large number of closed cells formed by fibers inside the vacuum heat-insulating member, thereby ensuring the volume of closed cells enough to prevent an inflow of gas and thus deterioration in heat-insulating performance.

The thickness of each of the vacuum heat-insulating members used in this test is 15 mm, and the thickness of the small-size wireless vacuum gauge is preferably 12 mm or less, in order to allow the small-size wireless vacuum gauge to be inserted inside the vacuum heat-insulating member. Further, the thickness of each of the vacuum heat-insulating members may be 25 mm or less and greater than that of the small-size wireless vacuum gauge

INDUSTRIAL APPLICABILITY

The vacuum heat-insulating member of the present invention is usable for an exterior wall of a dwelling house or an industrial plant, or the like, to efficiently utilize heat energy. In particular, the vacuum heat-insulating member of the present invention is capable of measuring heat-insulating performance after installation thereof, to utilize the measurement data for long-term operation and performance prediction.

LIST OF REFERENCE SIGNS

1: pressure sensor
2: operational amplifier
3: A/D converter
4: CPU and wireless transmission unit
5: temperature and humidity sensor and internal clock
6: battery
7: DC/DC converter

8: battery charging unit
10: small-size wireless vacuum gauge
20: vacuum heat-insulating member
30: vacuum pump
31: Pirani vacuum gauge
32: valve
33: connection jig

**Claims**

1. A vacuum heat-insulating member (20) comprising a core, a gas barrier film entirely covering the core, and an outer layer provided outside the gas barrier film, wherein the vacuum heat-insulating member (20) is configured to be internally depressurized and hermetically-sealed, the vacuum heat-insulating member (20) further comprises a small-size wireless vacuum gauge (10) on the inner side with respect to the outer layer, wherein the small-size wireless vacuum gauge (10) comprises at least: a pressure sensor (1); a battery (6) for supplying electric power to the pressure sensor (1); a battery charging unit (8) for charging the battery (6); and a transmission unit (4) for transmitting measurement data including at least a signal of a pressure value measured by the pressure sensor (1), and wherein

   the pressure sensor (1) is formed by microelectromechanical system (MEMS) techniques, and
   the battery charging unit (8) comprises a charging mechanism configured to charge the battery (6) without any electrical connection with an external power source,
   **characterized in that**
   the small-size wireless vacuum gauge (10) further comprises at least one of a temperature sensor (5), a humidity sensor (5), a sensor configured to measuring various molecular species, and an internal clock (5).

2. The vacuum heat-insulating member (20) as recited in claim 1, wherein the battery charging unit (8) comprises a Peltier element as the charging mechanism, and is configured to charge the battery (6) based on electric power generated by the Seebeck effect as a result of being applied with heat from outside the vacuum heat-insulating member (20).

3. The vacuum heat-insulating member (20) as recited in claim 1, wherein the battery charging unit (8) comprises an electric power receiving-side coil as the charging mechanism, and is configured to charge the battery (8) based on non-contact electric power supply with respect to an electric power transmitting-side coil located outside the vacuum heat-insulating member (20).

4. The vacuum heat-insulating member (20) as recited in claim 3, wherein the non-contact electric power supply is based on an electromagnetic induction method which is a method of transmitting electric power by means of an induction magnetic flux to be generated between the electric power receiving-side coil and the electric power transmitting-side coil.

5. The vacuum heat-insulating member (20) as recited in claim 3, wherein the non-contact electric power supply is based on a magnetic field resonance method which is a method of transmitting electric power under magnetic field resonance induced by causing a current to flow through the transmitting-side coil comprised in an electric power transmitting side-resonant circuit, to generate a magnetic field oscillation, and causing the generated magnetic field oscillation to be transmitted to the receiving-side coil comprised in an electric power receiving side-resonant circuit configured to resonate at a same frequency as that of the transmitting side-resonant circuit.

6. The vacuum heat-insulating member (20) as recited in any one of claims 1 to 5, wherein the pressure senor (1) is a thermocouple vacuum sensor.

7. The vacuum heat-insulating member (20) as recited in any one of claims 1 to 5, wherein the pressure senor (1) is a piezoresistive vacuum sensor.

8. The vacuum heat-insulating member (20) as recited in any one of claims 1 to 5, wherein the pressure senor (1) is a crystal vacuum sensor.

9. The vacuum heat-insulating member (20) as recited in any one of claims 1 to 5, wherein the pressure senor (1) is a combination of two or more selected from the group consisting of a thermocouple vacuum sensor, a piezoresistive vacuum sensor and a crystal vacuum sensor.

10. The vacuum heat-insulating member (20) as recited in any one of claims 1 to 9, wherein a volume of the small-size wireless vacuum gauge (10) is 7.5% or less with respect to a total volume of the vacuum heat-insulating member (20).

11. The vacuum heat-insulating member (20) as recited in claim 10, wherein the volume of the small-size wireless vacuum gauge (10) is 5.0% or less with respect to the total volume of the vacuum heat-insulating member (20).

12. The vacuum heat-insulating member (20) as recited in any one of claims 1 to 11, wherein a thickness of the small-size wireless vacuum gauge (10) is 12 mm or less.

13. The vacuum heat-insulating member (20) as recited in any one of claims 1 to 12, which has a thickness of equal to or less than 25 mm, and greater than a thickness of the small-size wireless vacuum gauge (10).

14. The vacuum heat-insulating member (20) as recited in any one of claims 1 to 13, wherein the transmission unit (4) is configured to transmit the measurement data, wirelessly in a sub-giga band of less than 1 GHz, or wirelessly in a 2.4 GHz band, or wirelessly in a 5 GHz band.

**Patentansprüche**

1. Vakuumwärmedämmelement (20), umfassend einen Kern, einen Gassperrfilm, der den Kern vollständig bedeckt, und eine Außenschicht, die außerhalb des Gassperrfilms vorgesehen ist, wobei das Vakuumwärmedämmelement (20) dazu ausgestaltet ist, innen drucklos gesetzt und hermetisch abgedichtet zu sein, das Vakuumwärmedämmelement (20) ferner ein drahtloses kleines Vakuummessgerät (10) auf der Innenseite bezogen auf die Außenschicht umfasst, wobei das drahtlose kleine Vakuummessgerät (10) mindestens Folgendes umfasst: einen Drucksensor (1); eine Batterie (6) zum Versorgen des Drucksensors (1) mit elektrischem Strom; eine Batterieladeeinheit (8) zum Laden der Batterie (6) und eine Übertragungseinheit (4) zum Übertragen von Messdaten, die mindestens ein Signal für einen von dem Drucksensor (1) gemessenen Druckwert aufweisen, und wobei

der Drucksensor (1) durch Techniken für mikroelektromechanische Systeme *(microelectromechanical system - MEMS)* ausgebildet ist, und
die Batterieladeeinheit (8) einen Lademechanismus umfasst, der dazu ausgestaltet ist, die Batterie (6) ohne elektrische Verbindung zu einer externen Stromquelle zu laden,
**dadurch gekennzeichnet, dass**
das drahtlose kleine Vakuummessgerät (10) ferner mindestens eines aus einem Temperatursensor (5), einem Feuchtigkeitssensor (5), einem Sensor, der dazu ausgestaltet ist, verschiedene Molekülspezies zu messen, und einem internen Zeitgeber (5) umfasst.

2. Vakuumwärmedämmelement (20) nach Anspruch 1, wobei die Batterieladeeinheit (8) ein Peltier-Element als Lademechanismus umfasst und dazu ausgestaltet ist, die Batterie (6) mit elektrischem Strom zu laden, der durch den Seebeck-Effekt dadurch erzeugt wird, dass Wärme von außerhalb des Vakuumwärmedämmelements (20) angewendet wird.

3. Vakuumwärmedämmelement (20) nach Anspruch 1, wobei die Batterieladeeinheit (8) eine Spule auf der Seite zur Aufnahme von elektrischem Strom als Lademechanismus umfasst und dazu ausgestaltet ist, die Batterie (8) über eine kontaktlose Versorgung mit elektrischem Strom bezogen auf eine Spule auf der Seite zur Übertragung von elektrischem Strom, die sich außerhalb des Vakuumwärmedämmelements (20) befindet, zu laden.

4. Vakuumwärmedämmelement (20) nach Anspruch 3, wobei die kontaktlose Versorgung mit elektrischem Strom auf einem elektromagnetischen Induktionsverfahren beruht, das ein Verfahren zum Übertragen von elektrischem Strom durch Induktion per magnetischem Fluss ist, der zwischen der Spule auf der Seite zur Aufnahme von elektrischem Strom und der Spule auf der Seite zur Übertragung von elektrischem Strom erzeugt wird.

5. Vakuumwärmedämmelement (20) nach Anspruch 3, wobei die kontaktlose Versorgung mit elektrischem Strom auf einem Magnetresonanzverfahren beruht, bei dem es sich um ein Verfahren zur Übertragung von elektrischem Strom unter Nutzung magnetischer Resonanz handelt, die dadurch bewirkt wird, dass veranlasst wird, dass ein Strom durch die Spule auf der Übertragungsseite fließt, die in einer Resonanzschaltung auf der Seite zur Übertragung von elektrischem Strom enthalten ist, damit ein oszillierendes Magnetfeld erzeugt wird, und dass veranlasst wird, dass das erzeugte oszillierende Magnetfeld an die Spule auf der Aufnahmeseite übertragen wird, die in einer Resonanzschaltung auf der Seite zur Aufnahme von elektrischem Strom enthalten ist, die dazu ausgestaltet ist, bei derselben Frequenz wie die der Resonanzschaltung auf der Übertragungsseite zu schwingen.

6. Vakuumwärmedämmelement (20) nach einem der Ansprüche 1 bis 5, wobei der Drucksensor (1) ein Thermoelement-Vakuumsensor ist.

7. Vakuumwärmedämmelement (20) nach einem der Ansprüche 1 bis 5, wobei der Drucksensor (1) ein piezoresistiver Vakuumsensor ist.

8. Vakuumwärmedämmelement (20) nach einem der Ansprüche 1 bis 5, wobei der Drucksensor (1) ein Kristallvakuumsensor ist.

9. Vakuumwärmedämmelement (20) nach einem der Ansprüche 1 bis 5, wobei der Drucksensor (1) eine Kombination aus zwei oder mehr Sensoren ist, die aus der Gruppe bestehend aus einem Thermoelement-Vakuumsensor, einem piezoresistiven Vakuumsensor und einem Kristallsensor als Vakuumsensor ausgewählt sind.

10. Vakuumwärmedämmelement (20) nach einem der Ansprüche 1 bis 9, wobei ein Volumen des drahtlosen kleinen Vakuummessgeräts (10) bezogen auf ein Gesamtvolumen des Vakuumwärmedämmelements (20) 7,5% oder weniger beträgt.

11. Vakuumwärmedämmelement (20) nach Anspruch 10, wobei das Volumen des drahtlosen kleinen Vakuummessgeräts (10) bezogen auf das Gesamtvolumen des Vakuumwärmedämmelements (20) 5,0% oder weniger beträgt.

12. Vakuumwärmedämmelement (20) nach einem der Ansprüche 1 bis 11, wobei eine Dicke des drahtlosen kleinen Vakuummessgeräts (10) 12 mm oder weniger beträgt.

13. Vakuumwärmedämmelement (20) nach einem der Ansprüche 1 bis 12, dessen Dicke gleich 25 mm oder kleiner ist und die größer als eine Dicke des drahtlosen kleinen Vakuummessgeräts (10) ist.

14. Vakuumwärmedämmelement (20) nach einem der Ansprüche 1 bis 13, wobei die Übertragungseinheit (4) dazu ausgestaltet ist, die Messdaten drahtlos in einem Band von unter 1 GHz oder drahtlos in einem 2,4-GHz-Band oder drahtlos in einem 5-GHz-Band zu übertragen.

## Revendications

1. Élément d'isolation thermique sous vide (20) comprenant une âme, un film barrière aux gaz recouvrant totalement l'âme, et une couche extérieure prévue à l'extérieur du film barrière aux gaz, ledit élément d'isolation thermique sous vide (20) étant prévu pour être dépressurisé intérieurement et scellé hermétiquement, ledit élément d'isolation thermique sous vide (20) comprenant en outre un vacuomètre sans fil de petite dimension (10) à l'intérieur par rapport à la couche extérieure, ledit vacuomètre sans fil de petite dimension (10) comprenant au moins : un capteur de pression (1) ; une batterie (6) pour l'alimentation électrique du capteur de pression (1) ; une unité de charge de batterie (8) pour la charge de la batterie (6) ; et une unité de transmission (4) pour la transmission de données de mesure comprenant au moins un signal d'une valeur de pression mesurée par le capteur de pression (1), et où

le capteur de pression (1) est formé par technique de système microélectromécanique *(microelectromechanical system* - MEMS), et
l'unité de charge de batterie (8) comprend un mécanisme de charge prévu pour charger la batterie (6) sans aucune connexion électrique à une source d'énergie externe,
**caractérisé en ce que**
le vacuomètre sans fil de petite dimension (10) comprend en outre au moins un parmi un capteur de température (5), un capteur d'humidité (5), un capteur prévu pour mesurer différentes espèces moléculaires, et une horloge interne (5).

**2.** Élément d'isolation thermique sous vide (20) selon la revendication 1, où l'unité de charge de batterie (8) comprend un élément Peltier en tant que mécanisme de charge, et est prévue pour charger la batterie (6) sur la base de l'énergie électrique générée par l'effet Seebeck résultant de l'application avec de la chaleur depuis l'extérieur de l'élément d'isolation thermique sous vide (20).

**3.** Élément d'isolation thermique sous vide (20) selon la revendication 1, où l'unité de charge de batterie (8) comprend une bobine côté de réception d'énergie électrique en tant que mécanisme de charge, et est prévue pour charger la batterie (8) sur la base d'une alimentation électrique sans contact par rapport à une bobine côté de transmission d'énergie électrique disposée à l'extérieur de l'élément d'isolation thermique sous vide (20).

**4.** Élément d'isolation thermique sous vide (20) selon la revendication 3, où l'alimentation électrique sans contact est réalisée sur la base d'un procédé d'induction électromagnétique, lequel est un procédé de transmission d'énergie électrique au moyen d'une induction de flux magnétique à générer entre la bobine côté de réception d'énergie électrique et la bobine côté de transmission d'énergie électrique.

**5.** Élément d'isolation thermique sous vide (20) selon la revendication 3, où l'alimentation électrique sans contact est réalisée sur la base d'un procédé de résonance de champ magnétique, lequel est un procédé de transmission d'énergie électrique par résonance de champ magnétique induit en provoquant la circulation d'un courant dans la bobine côté de transmission comprise dans un circuit résonnant côté de transmission d'énergie électrique, afin de générer un champ magnétique oscillant, et en provoquant la transmission du champ magnétique oscillant généré vers la bobine côté de réception comprise dans un circuit résonnant côté de réception d'énergie électrique prévu pour résonner à la même fréquence que le circuit résonnant côté de transmission.

**6.** Élément d'isolation thermique sous vide (20) selon l'une quelconque des revendications 1 à 5, où le capteur de pression (1) est un capteur de vide à thermocouple.

**7.** Élément d'isolation thermique sous vide (20) selon l'une quelconque des revendications 1 à 5, où le capteur de pression (1) est un capteur de vide piézo-résistif.

**8.** Élément d'isolation thermique sous vide (20) selon l'une quelconque des revendications 1 à 5, où le capteur de pression (1) est un capteur de vide à quartz.

**9.** Élément d'isolation thermique sous vide (20) selon l'une quelconque des revendications 1 à 5, où le capteur de pression (1) est une combinaison de deux capteurs de vide ou plus, sélectionnés dans le groupe comprenant un capteur de vide à thermocouple, un capteur de vide piézo-résistif et un capteur de vide à quartz.

**10.** Élément d'isolation thermique sous vide (20) selon l'une quelconque des revendications 1 à 9, où le volume du vacuomètre sans fil de petite dimension (10) est de 7,5 % ou moins par rapport au volume total de l'élément d'isolation thermique sous vide (20).

**11.** Élément d'isolation thermique sous vide (20) selon la revendication 10, où le volume du vacuomètre sans fil de petite dimension (10) est de 5,0 % ou moins par rapport au volume total de l'élément d'isolation thermique sous vide (20).

**12.** Élément d'isolation thermique sous vide (20) selon l'une quelconque des revendications 1 à 11, où l'épaisseur du vacuomètre sans fil de petite dimension (10) est de 12 mm ou moins.

**13.** Élément d'isolation thermique sous vide (20) selon l'une quelconque des revendications 1 à 12, ayant une épaisseur égale ou inférieure à 25 mm, et supérieure à l'épaisseur du vacuomètre sans fil de petite dimension (10).

**14.** Élément d'isolation thermique sous vide (20) selon l'une quelconque des revendications 1 à 13, où l'unité de transmission (4) est prévue pour transmettre les données de mesure sans fil dans une sous-giga bande de moins de 1 GHz, ou sans fil dans une bande de 2,4 GHz, ou sans fil dans une bande de 5 GHz.

EP 3 693 649 B1

## FIG.1

# FIG.2

FIG.3

## FIG.4

Change in thermal performance in 90°C environment of vacuum  heat-insulating member equipped with sensor

Legend:
- No.1
- No.2
- No.3
- No.4
- No.5
- No.6
- No.7
- No.8
- No.9
- No.10
- No.11

Thermal Conductivity (W/mk) vs Number of Days (day)

EP 3 693 649 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4641565 B
- JP 2012136254 A
- JP 2015513327 A
- WO 2012017903 A1
- JP 2012180904 A